# FASCICULE DE BREVET EUROPEEN

(11) **EP 0 752 355 B1**
(45) Date de publication et mention de la délivrance du brevet: **17.01.2001**
(21) Numéro de dépôt: 96440054.3
(22) Date de dépôt: 01.07.1996
(51) Int. Cl.: B60T 7/20, B60T 13/22

(54) **Machine agricole comportant au moins une roue à laquelle est associé un frein**
Landmaschine mit zumindest einem, mit einer Bremse versehenen, Rad
Agricultural machine with at least one wheel to which a brake is associated

(30) Priorité: 04.07.1995 FR 9508215
(43) Date de publication de la demande: 08.01.1997
(73) Titulaire: KUHN S.A., 67700 Saverne (FR)
(72) Inventeur: Helfer, Roland, 67450 Lampertheim (FR); Wilhelm, Joel, 57820 Saint-Louis (FR)

(56) Documents cités:
- EP-A- 0 094 689
- DE-A- 2 107 759
- DE-A- 3 402 718
- DE-B- 1 103 778
- US-A- 5 076 401

## Description

La présente invention concerne les machines agricoles comportant un corps s'appuyant sur le sol à l'aide d'au moins une roue, et un moyen d'attelage destiné à lier la machine agricole à un véhicule moteur.

Il est connu d'équiper la (les) roue(s) (généralement de transport) de telles machines agricoles d'un frein fonctionnant à la fois comme frein de service lorsque le véhicule moteur déplace la machine agricole, et comme frein de parcage lorsque la machine agricole est dételée du véhicule moteur.

Il est prévu un premier dispositif d'actionnement du (des) frein(s) lorsque celui-ci (ceux-ci) doit (doivent) fonctionner en tant que frein de service. Ce premier dispositif d'actionnement comprend en général un (plusieurs) vérin(s) agissant sur l'organe de commande du (des) frein(s). L'alimentation de ce (ces) vérin(s), du type hydraulique ou pneumatique selon la législation en vigueur, est réalisée au travers d'une conduite branchée directement sur le circuit de freinage du véhicule moteur qui comporte une prise adéquate à cet effet. Ainsi, l'actionnement du frein de service du véhicule moteur provoque simultanément l'actionnement du frein de service de la machine agricole.

Il est ensuite prévu un deuxième dispositif d'actionnement du (des) frein(s) lorsque celui-ci (ceux-ci) doit (doivent) fonctionner en tant que frein de parcage. Ce deuxième dispositif d'actionnement comporte en général un levier à cliquet auquel est (sont) lié(s) un (plusieurs) câble(s) lié(s) par ailleurs à l'organe de commande du (des) frein(s). En actionnant le levier à cliquet, on tire sur le (les) câble(s) qui agit (agissent) sur l'organe de commande du (des) frein(s). Ce deuxième dispositif d'actionnement est donc du type purement mécanique tel que requis par les législations en vigueur.

L'implantation de ce (ces) câbles(s) peut souvent s'avérer gênante aussi bien pour le fonctionnement de la machine agricole que pour le fonctionnement du (des) câble(s) lui-même (eux-mêmes).

De surcroît, en cas de rupture du (des) câble(s), le frein de parcage n'est plus opérationnel.

La remorque agricole décrite dans le document DE-B-1 103 778 qui constitue l'état de la technique le plus proche, comporte un corps s'appuyant sur le sol au moyen de deux roues dotées de frein, et un timon destiné à lier la remorque à un tracteur agricole.

Ledit frein comprend un organe de commande sur lequel agit un organe de manoeuvre actionné par un organe d'actionnement en vue, notamment, du blocage du frein lors du parcage de la remorque.

Dans cette remorque connue, l'organe de manoeuvre comporte également :
- un premier vérin actionné par l'organe d'actionnement,
- un deuxième vérin branché en série avec le premier vérin au moyen d'une conduite hydraulique,
- un ressort de manoeuvre mécanique rendant le frein actif lorsque l'organe d'actionnement est actionné à la fermeture, tandis que le deuxième vérin neutralise le frein lorsque l'organe d'actionnement est actionné à l'ouverture,
- un levier double articulé sur le corps de la remorque et lié au deuxième vérin, et
- un câble liant le levier double à l'organe de commande du frein.

Dans cette remorque connue,
- le blocage du frein de parcage est bien réalisé par action purement mécanique, en l'occurrence par l'action du ressort de manoeuvre mécanique, la tige du deuxième vérin, le levier double et le câble,
- l'ouverture du frein de parcage et le maintien de celui-ci en position ouverte sont réalisés par le premier vérin et le deuxième vérin, et
- le frein de parcage reste opérationnel même si la conduite hydraulique liant le premier vérin et le deuxième vérin devait devenir défectueuse.

Dans cette remorque connue, le frein de parcage ne reste par contre pas non plus opérationnel lorsque le câble devait devenir défectueux.

Le but de la présente invention est de remédier à ce (ces) problème(s).

A cet effet, l'invention concerne une machine agricole qui comporte d'une part un corps s'appuyant sur le sol à l'aide d'au moins une roue liée à un support de roue et à laquelle est associé un frein, et d'autre part un moyen d'attelage destiné à lier la machine agricole à un véhicule moteur, ledit support de roue étant articulé à un châssis que comporte le corps ou au moyen d'attelage, ledit frein comprenant notamment un organe de commande constitué d'une biellette de commande montée sur un axe de commande de came et sur laquelle agit un organe de manoeuvre actionné par un organe d'actionnement en vue du blocage du frein lors du parcage de la machine agricole, ledit organe de manoeuvre comportant :
- un premier vérin actionné par l'organe d'actionnement,
- un deuxième vérin implanté entre le support de roue et l'organe de commande et branché en série avec le premier vérin, et
- un ressort de manoeuvre mécanique implanté directement ou indirectement entre le support de roue et l'organe de commande,
ce ressort de manoeuvre mécanique rendant le frein actif lorsque l'organe d'actionnement est actionné à la fermeture, tandis que le deuxième vérin neutralise le frein lorsque l'organe d'actionnement est actionné à l'ouverture.

Dans la machine agricole selon l'invention, le blocage du frein de parcage est donc réalisé, conformément aux législations en vigueur, par action purement mécanique, en l'occurrence par l'action du ressort de manoeuvre mécanique. L'ouverture du frein de parcage et le maintien de celui-ci en position ouverte sont, par contre, réalisés par le premier vérin et le deuxième vérin. Ceux-ci sont liés l'un à l'autre au moyen d'une simple conduite hydraulique ou pneumatique selon le cas, qui peut être implantée très aisément à un endroit où elle ne gène pas le bon fonctionnement de la machine agricole et où son propre fonctionnement n'est pas entravé. On comprendra enfin que le frein de parcage restera opérationnel, même si ladite conduite devait devenir défectueuse car le ressort de manoeuvre mécanique est implanté directement ou indirectement entre le support de roue et l'organe de commande.

Le premier vérin et le deuxième vérin comportent, de manière connue, un corps et une tige.

Dans une machine agricole conforme à l'invention, il pourra être prévu que la tige du premier vérin soit déplacée dans un sens par l'organe d'actionnement lorsque ce dernier est actionné à la fermeture, et qu'il soit prévu un organe accumulateur d'énergie pour déplacer ladite tige dans l'autre sens lorsque l'organe d'actionnement est actionné à l'ouverture.

Dans une solution avantageuse, il pourra être prévu que l'organe d'actionnement tire la tige en dehors du corps du premier vérin lorsque ledit organe d'actionnement sera actionné à la fermeture, tandis que l'organe accumulateur d'énergie fera rentrer ladite tige dans le corps du premier vérin lorsque l'organe d'actionnement sera actionné à l'ouverture.

On comprendra que l'action exercée par l'organe accumulateur d'énergie sur la tige du premier vérin crée une pression suffisante dans le deuxième vérin pour permettre à celui-ci de vaincre l'action du ressort de manoeuvre mécanique quand le frein de parcage doit être desserré.

Dans un souci de compacité notamment, il pourra être prévu que l'organe accumulateur d'énergie s'étende à l'intérieur du corps du premier vérin.

Cet organe accumulateur d'énergie pourra être avantageusement réalisé sous forme de ressort mécanique. Dans une solution préférentielle, ce ressort mécanique sera un ressort de compression entourant la partie de la tige s'étendant à l'intérieur du corps du premier vérin.

En ce qui concerne le ressort de manoeuvre mécanique, celui-ci pourra, dans une solution avantageuse, être monté en parallèle avec le deuxième vérin. Dans un souci de compacité, il pourra, dans ce cas, être prévu que ledit ressort de manoeuvre mécanique entoure le deuxième vérin. Le montage de l'ensemble ressort de manoeuvre mécanique - deuxième vérin sera alors particulièrement simple lorsque ledit ressort de manoeuvre mécanique sera fixé, à l'une de ses extrémités, sur le corps du deuxième vérin et, à l'autre de ses extrémités, sur la tige dudit deuxième vérin.

Il pourra, par ailleurs, être prévu un dispositif de réglage pour compenser l'usure du frein. De préférence, ce dispositif de réglage permettra une compensation continue de l'usure du frein.

Dans une solution particulièrement avantageuse, ce dispositif de réglage sera prévu au niveau de la liaison du deuxième vérin et, le cas échéant, de la liaison du ressort de manoeuvre mécanique au support de roue.

En ce qui concerne l'organe d'actionnement, celui-ci sera, de préférence, monté sur le moyen d'attelage dans le voisinage où ce dernier est destiné à être attelé au véhicule moteur.

Il pourra également être prévu un élément de commande à distance permettant d'actionner l'organe d'actionnement à partir du véhicule moteur auquel est destinée à être attelée la machine agricole.

De préférence, cet organe d'actionnement sera constitué d'un levier à cliquet.

Dans une machine agricole conforme à l'invention, dans laquelle ladite roue est une roue de transport, le premier vérin pourra comporter une autre chambre entièrement traversée par la tige dudit premier vérin et contenant un piston susceptible de coulisser sur ladite tige jusqu'à une butée prévue sur celle-ci. Ce piston sera appliqué contre la butée au moyen d'un fluide sous pression délivré par l'utilisateur, à partir d'une source d'alimentation, pour déplacer ladite tige en vue de rendre le frein actif.

De préférence, le fluide sous pression sera délivré par la source d'alimentation lorsque l'utilisateur actionnera le frein de service du véhicule moteur auquel est destinée à être attelée la machine agricole. Cette source d'alimentation de fluide sous pression sera d'ailleurs préférentiellement la même que celle qui alimente le frein de service du véhicule moteur.

Le frein de ladite machine agricole pourra ainsi servir à la fois de frein de parcage et de frein de service.

On comprendra qu'une machine agricole conforme à l'invention pourra comporter plusieurs roues à chacune desquelles seront associés un deuxième vérin et un ressort de manoeuvre mécanique. Par contre, le premier vérin sera, de préférence, commun à toutes lesdites roues.

La présente invention s'applique tout particulièrement (mais non exclusivement) aux machines agricoles dont le support de roue de la (de chaque) roue est articulé à un châssis que comporte le corps ou au moyen d'attelage.

D'autres caractéristiques et avantages de la présente invention ressortent de la description suivante d'un exemple de réalisation non limitatif faite en référence au dessin annexé dans lequel :
- la figure 1 montre une machine agricole conforme à l'invention attelée à un véhicule moteur et placée en position de travail ;
- la figure 2 montre la machine agricole de la figure 1 placée en position de transport ;
- la figure 3 montre la machine agricole des figures 1 et 2 en position de parcage, c'est-à-dire dételée du véhicule moteur ;
- la figure 4 montre une roue de transport et sa liaison au châssis de la machine agricole des figures 1 à 3, vues suivant la flèche IV définie sur la figure 3 ;
- la figure 5 montre ladite roue de transport et sa liaison vues suivant la flèche V définie sur la figure 4 ;
- la figure 6 montre une coupe longitudinale du premier vérin ;
- la figure 7 montre, à une échelle agrandie, la zone VII de la figure 6 ;
- la figure 8 montre schématiquement le dispositif de freinage lors du transport (figure 2), frein de service du véhicule moteur non actionné ;
- la figure 9 montre schématiquement le dispositif de freinage lors du transport (figure 2), frein de service du véhicule moteur actionné ;
- la figure 10 montre schématiquement le dispositif de freinage lorsque la machine agricole est en position de parcage (figure 3).

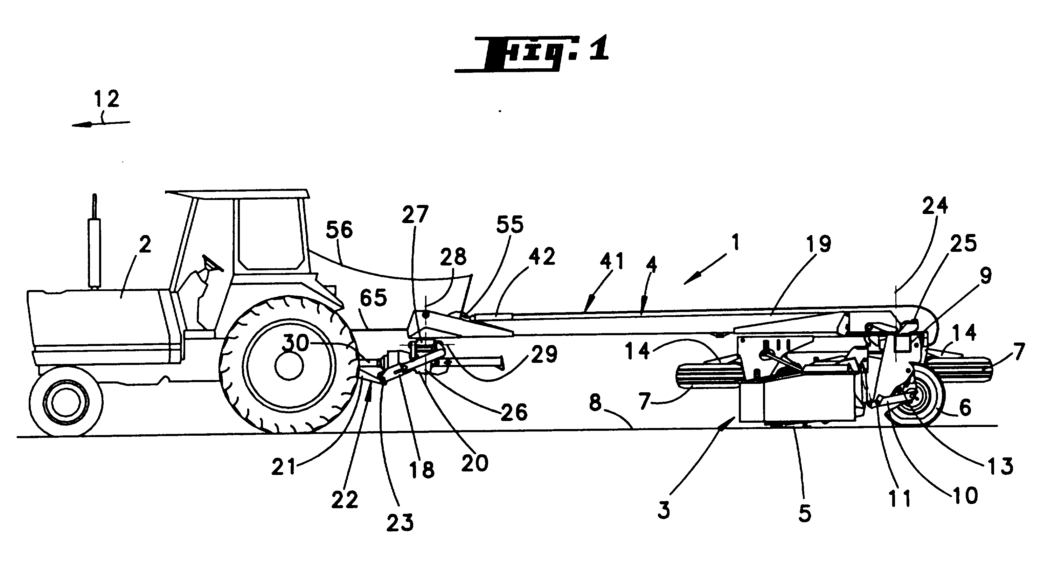

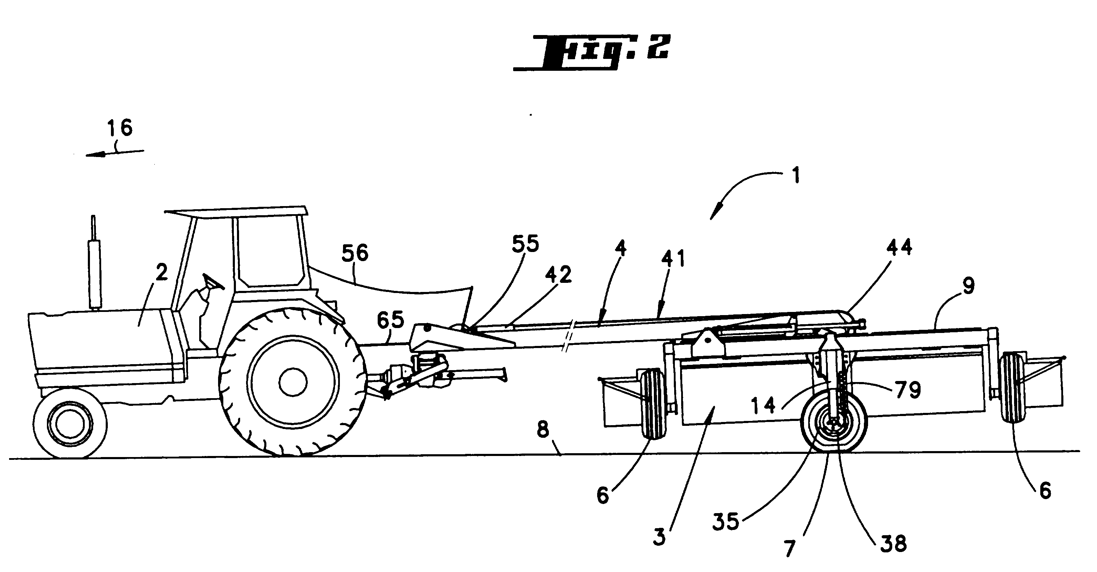

Sur les figures 1 et 2, on a représenté une machine agricole (1) conforme à l'invention. Cette machine agricole (1) réalisée de manière non limitative sous forme de faucheuse conditionneuse traînée, est attelée à un véhicule moteur (2). Elle comporte un corps (3) et un timon (4) (moyen d'attelage) permettant sa liaison audit véhicule moteur (2).

Le corps (3) de cette machine agricole (1) est muni d'organes de travail (5), de roues de travail (6) et de roues de transport (7). Durant le travail, le corps (3) s'appuie sur le sol (8) au moyen des roues de travail (6) (figure 1). Durant le transport par contre, ledit corps (3) s'appuie sur le sol (8) à l'aide des roues de transport (7) (figure 2). Les différentes transformations de la machine agricole (1) pour la mettre dans la position de travail (figure 1) ou dans la position de transport (figure 2) ne seront pas décrites car elles sont parfaitement connues de l'homme du métier (confer par exemple le document EP 0 452 237 A1 auquel on se reportera en cas de besoin).

Chaque roue de travail (6) est liée au châssis (9) du corps (3) au moyen d'un bras de roue (10) correspondant, de sorte à pouvoir être pivotée autour d'un axe (11) horizontal dirigé transversalement à la direction d'avance (12) au travail. Le pivotement du bras de roue (10) autour de l'axe (11) est réalisé par l'intermédiaire d'un vérin hydraulique (13) correspondant.

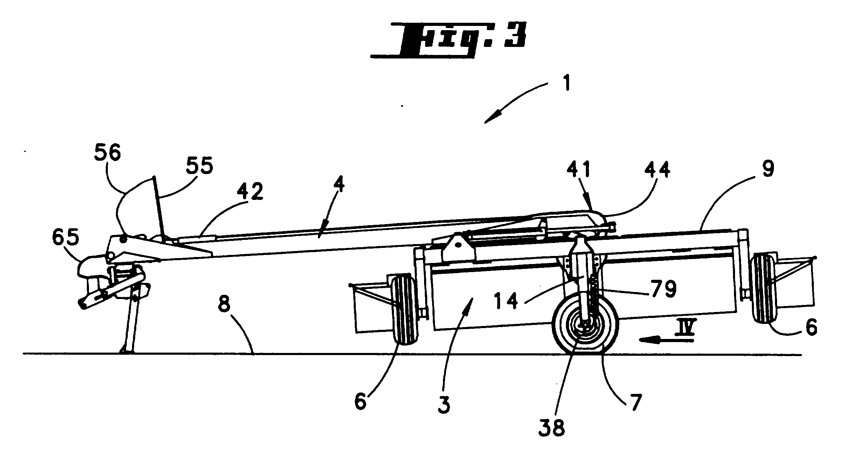

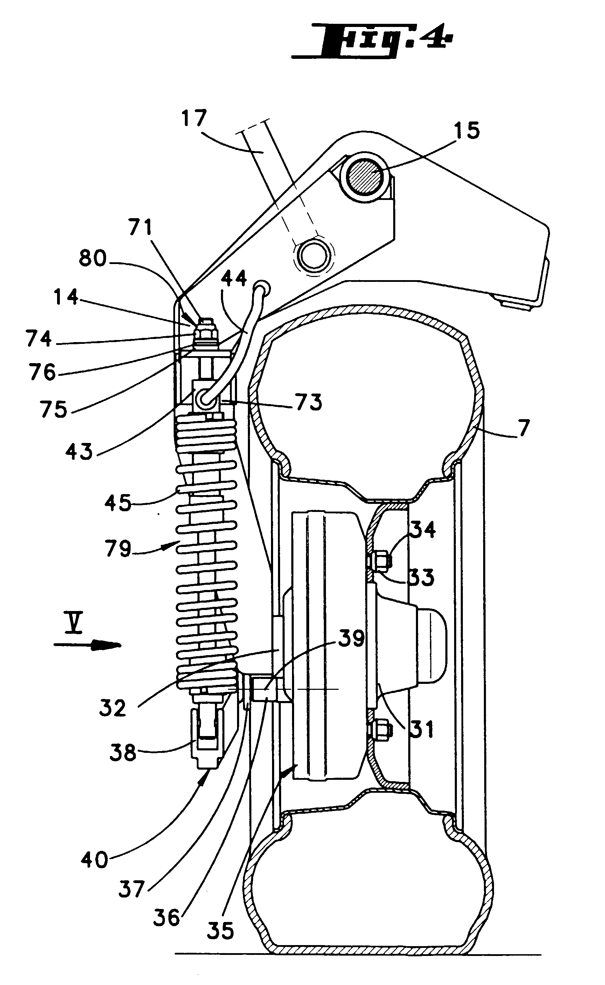

Chaque roue de transport (7) est également liée au châssis (9) du corps (3) au moyen d'un bras de roue (14) correspondant, de sorte à pouvoir être pivotée autour d'un axe (15) (figure 4) horizontal dirigé suivant la direction de transport (16) (figure 2). Le pivotement du bras de roue (14) autour de l'axe (15) est réalisé par l'intermédiaire d'un vérin hydraulique (17) correspondant (figure 4).

Le timon (4) comprend un timon primaire (18), un timon secondaire (19) et un dispositif de liaison et de transmission (20).

Le timon primaire (18) est destiné à être lié aux deux barres inférieures (21) du dispositif d'attelage (22) du véhicule moteur (2). Le timon primaire (18) peut ainsi pivoter autour d'un premier axe (23) matérialisé par les deux points de liaison auxdites barres inférieures (21). Ce premier axe de pivotement (23) s'étend, en position normale de déplacement, au moins sensiblement horizontalement et au moins sensiblement orthogonalement à la direction d'avance (12) durant le travail (figure 1) ou à la direction d'avance (16) durant le transport (figure 2).

Le timon secondaire (19) est lié au corps (3), de sorte à pouvoir être pivoté autour d'un axe (24) dirigé vers le haut, de préférence sous l'action d'un vérin hydraulique (25). En position normale de déplacement, l'axe (24) est au moins sensiblement vertical. Le timon (4) peut ainsi occuper une position de transport (figure 2) et au moins une position de travail (figure 1) par rapport au corps (3).

Le dispositif de liaison et de transmission (20) comporte deux parties (26, 27) pouvant pivoter l'une par rapport à l'autre autour d'un deuxième axe (28) dirigé vers le haut (en position normale de déplacement, ce deuxième axe (28) s'étend au moins sensiblement verticalement). La partie secondaire (27) est fixée sur le timon secondaire (19). Le timon primaire (18), quant à lui, est articulé sur la partie primaire (26), de sorte à pouvoir pivoter autour d'un troisième axe (29) dirigé au moins sensiblement suivant la direction d'avance (12) durant le travail (figure 1) ou suivant la direction d'avance (16) durant le transport (figure 2).

L'animation des organes de travail (5) est réalisée à partir de l'arbre de prise de force (non représenté) du véhicule moteur (2). Cet arbre est accouplé à un arbre d'entrée (non représenté) (dont l'axe de rotation est dirigé au moins sensiblement suivant la direction d'avance (12) au travail) de la partie primaire (26) au moyen d'un arbre de transmission télescopique à joints universels (30). Le mouvement est transmis à l'intérieur du dispositif de liaison et de transmission (20) depuis ledit arbre d'entrée de la partie primaire (26) jusqu'à un arbre de sortie (non représenté) de la partie secondaire (27) par un mécanisme connu de l'homme de l'art. Cet arbre de sortie est accouplé, au moyen d'un joint universel (non représenté), à un arbre de transmission (non représenté) logé à l'intérieur du timon secondaire (19). La poursuite de la transmission du mouvement ne sera pas décrite plus en détail car elle est connue de l'homme de l'art (confer à titre d'exemple non limitatif le document EP 0 429 382 A1 auquel on se reportera en cas de besoin).

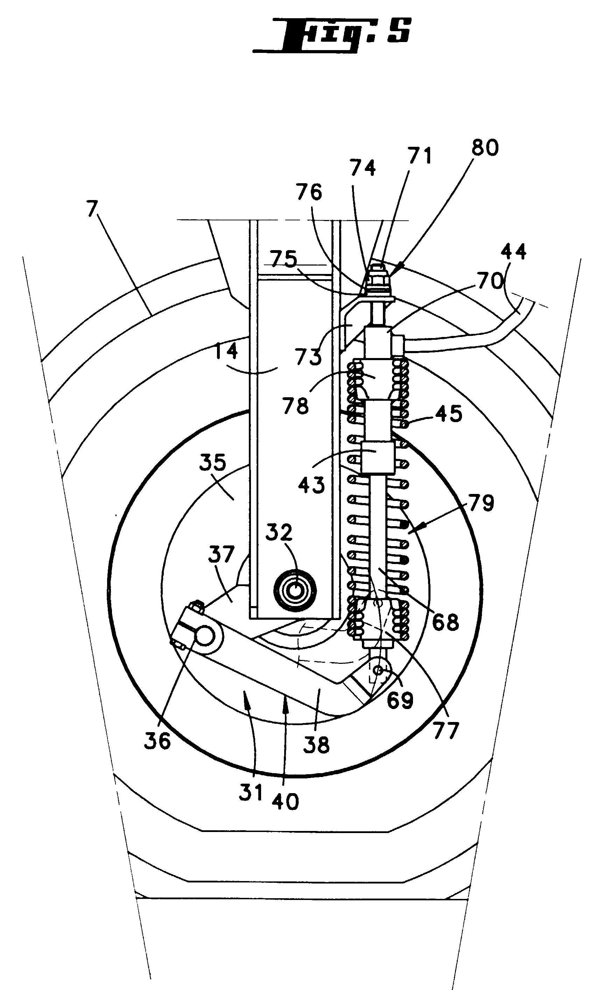

Comme visible sur les figures 4 et 5, le bras de roue (14) de chaque roue de transport (7) est muni d'un moyeu (31) dont la fusée (32) est soudée à l'extrémité dudit bras de roue (14) éloignée du châssis (9). La roue de transport (7), quant à elle, est centrée sur ce moyeu (31) et y est fixée à l'aide d'écrous (33) vissés sur des goujons (34) dudit moyeu (31).

Ce moyeu (31) contient un frein (35) dont on aperçoit l'axe de commande de came (36). Près de son extrémité extérieure, l'axe de commande de came (36) est soutenue par une plaquette de maintien (37) soudée sur le bras de roue (14). Sur ladite extrémité extérieure de l'axe de commande de came (36) est montée une biellette de commande (38) destinée à faire tourner l'axe de commande de came (36) autour de son axe longitudinal (39). Le moyeu (31) et son frein (35) ne seront pas décrits plus en détail étant donné qu'ils sont connus par un homme du métier.

Cette biellette de commande (38) et l'axe de commande de came (36) constituent l'organe de commande (40) du frein (35).

La machine agricole (1) comporte par ailleurs un organe de manoeuvre (41) destiné à agir sur cet organe de commande (40) du frein (35).

L'organe de manoeuvre (41) comporte :
- un premier vérin (42) fixé sur le timon (4),
- un deuxième vérin (43) implanté entre le bras de roue (14) et la biellette de commande (38),
- une conduite (44) reliant le premier vérin (42) au deuxième vérin (43),
- un ressort de manoeuvre mécanique (45) également implanté entre le bras de roue (14) et la biellette de commande (38), c'est-à-dire monté en parallèle avec le deuxième vérin (43) (dans la réalisation représentée, le ressort de manoeuvre mécanique (45) est implanté indirectement entre le bras de roue (14) et la biellette de commande (38)).

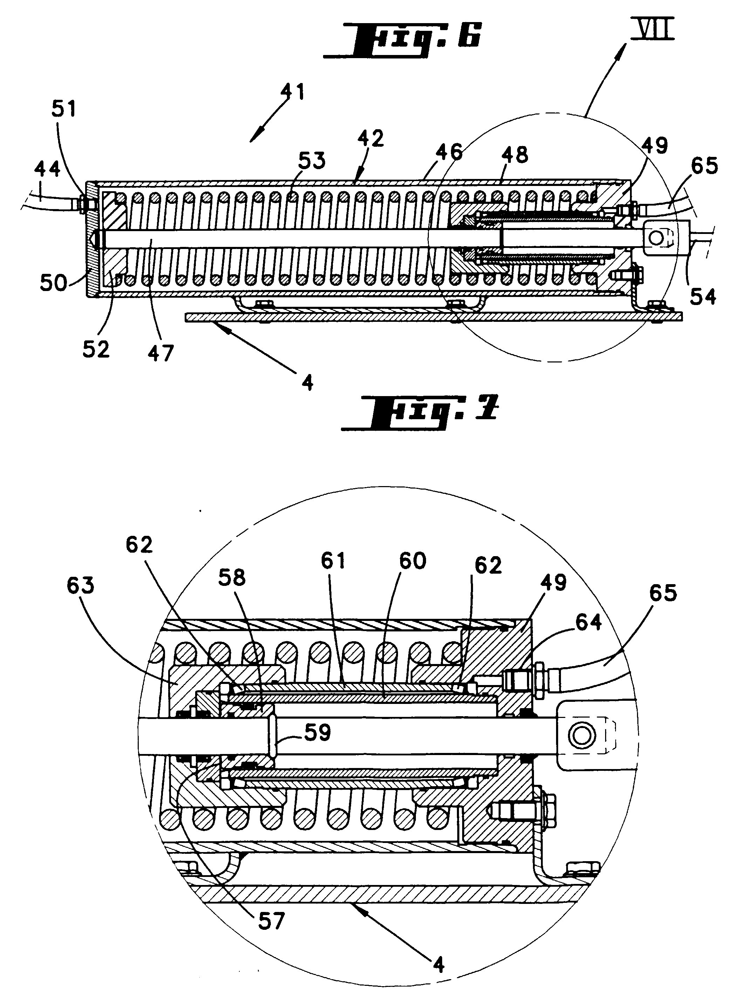

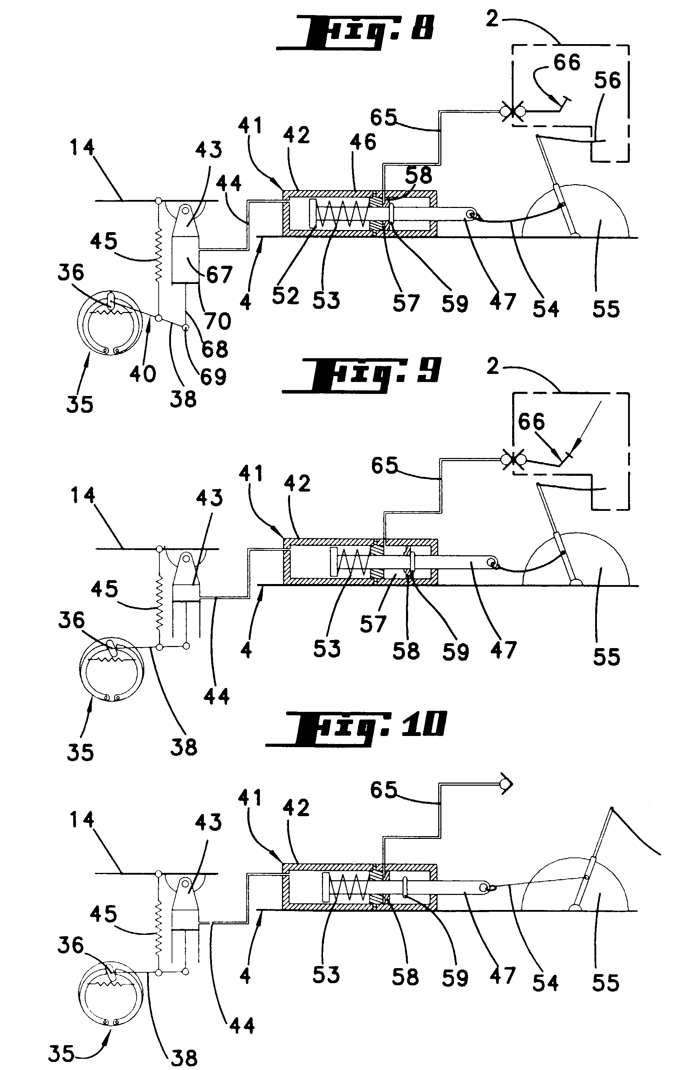

Le premier vérin (42) est représenté en détail sur les figures 6 et 7. Il comporte un corps (46) et une tige (47).

Le corps (46) est composé d'un corps tubulaire (48) et de deux obturateurs (49, 50). Le premier obturateur (49) situé à l'extrémité où la tige (47) sort du corps (46), est vissé dans le corps tubulaire (48). Le deuxième obturateur (50), par contre, est soudé audit corps tubulaire (48) et est muni d'un orifice (51) sur lequel est branchée la conduite (44).

A son extrémité s'étendant à l'intérieur du corps (46), la tige (47) est munie d'une rondelle d'appui (52). Un ressort mécanique de compression (53) (organe accumulateur d'énergie) logé dans le corps (46), s'étend entre cette rondelle d'appui (52) et ledit corps (46) (dans la réalisation représentée ledit ressort de compression (53) s'étend entre la rondelle d'appui (52) et le premier obturateur (49) et entoure ainsi la partie de la tige (47) s'étendant à l'intérieur du corps (46)).

A son extrémité s'étendant en dehors du corps (46), la tige (47) est liée à un élément de traction (54) du type câble ou analogue, lui-même lié à un levier à cliquet (55) (figures 1 à 3 et 8 à 10) fixé sur l'extrémité frontale du timon (4). Un élément de commande à distance (56) (figures 1, 2 et 8) permet à l'utilisateur d'actionner, depuis le poste de pilotage du véhicule moteur (2), le levier à cliquet (55) à la fermeture ou à l'ouverture.

Le premier vérin (42) comporte une autre chambre (57) dans laquelle est logé un piston (58). Ce piston (58) est par ailleurs monté coulissant sur la tige (47) et peut être appliqué contre une butée (59) prévue sur ladite tige (47).

Cette autre chambre (57) est réalisée par un tube intérieur (60). Celui-ci est entouré avec jeu par un tube extérieur (61) dont les deux extrémités ont été rétrécies et ont été soudées au tube intérieur (60). Au niveau de chaque extrémité du tube extérieur (61) a été ménagé au moins un orifice (62) débouchant dans l'espace existant entre les deux tubes (60, 61). A son extrémité en regard du premier obturateur (49), le tube extérieur (61) est vissé dans ledit premier obturateur (49). L'extrémité correspondante du tube intérieur (60), quant à elle, est centrée dans le premier obturateur (49). A son autre extrémité, le tube extérieur (61) est vissé dans une pièce de fermeture (63) centrée sur la tige (47).

Le premier obturateur (49) est également muni d'un orifice (64) permettant d'injecter un fluide sous pression dans la partie de l'autre chambre (57) située en regard de la pièce de fermeture (63). Sur cet orifice (64) est branchée une conduite (65) qui est branchée par ailleurs sur le circuit du frein de service (66) du véhicule moteur (2) (figures 8 et 9).

Le deuxième vérin (43) est un vérin simple effet dont la grande chambre (67) (figures 8, 9 et 10) communique avec le premier vérin (42) au moyen de la conduite (44). L'extrémité extérieure de la tige (68) de ce deuxième vérin (43) est liée à la biellette de commande (38) à l'aide d'une articulation (69). A l'extrémité opposée à celle où sort la tige (68), le corps (70) du deuxième vérin (43) est muni d'une tige filetée (71) s'étendant suivant l'axe longitudinal dudit deuxième vérin (43). Cette tige filetée (71) traverse un trou pratiqué dans une console (73) solidaire du bras de roue (14). Sur l'extrémité de la tige filetée (71) s'étendant au-delà de la console (73) est vissé un écrou (74) après interposition de deux rondelles complémentaires (75, 76). La première rondelle (75) présente une surface concaves tandis que la deuxième rondelle (76) présente une surface convexe complémentaire. Ces deux surfaces complémentaires sont conformées de telle sorte que la liaison du deuxième vérin (43) à la console (73) présente au moins un axe géométrique d'articulation au moins sensiblement parallèle à l'axe géométrique de l'articulation (69) et à l'axe longitudinale (39) de l'axe de commande de came (36).

Le ressort de manoeuvre mécanique (45) réalisé sous forme de ressort de traction, entoure le deuxième vérin (43). A l'une de ses extrémités, le ressort de manoeuvre mécanique (45) est vissé sur un premier embout fileté (77) solidaire de la tige (68) du deuxième vérin (43). A son autre extrémité, le ressort de manoeuvre mécanique (45) est vissé sur un deuxième embout fileté (78) solidaire du corps (70) du deuxième vérin (43).

Le deuxième vérin (43) et le ressort de manoeuvre mécanique (45) constituent ainsi une unité (79) implantée entre le bras de roue (14) et la biellette de commande (38).

La position de cette unité (79) peut être réglée par rapport au bras de roue (14) grâce au dispositif de réglage (80) constitué de la tige filetée (71), des rondelles (75, 76) et de l'écrou (74). Ce dispositif de réglage (80) permet ainsi de compenser, de manière continue, l'usure du frein (35).

La machine agricole (1) qui vient d'être décrite, comporte deux roues de transport (7). Chacune de ces roues de transport (7) est munie d'une telle unité (79). Ladite machine agricole (1) ne comporte, par contre, qu'un seul premier vérin (42) qui est en communication avec les deux deuxièmes vérins (43), et ceci de telle manière que le freinage soit au moins sensiblement équilibré au niveau des deux roues de transport (7).

Bien que cela n'ait pas été décrit, on comprendra que le premier vérin (42) et les deuxièmes vérins (43) comportent chacun les dispositifs nécessaires à leur étanchéité.

Le fonctionnement du dispositif de freinage de la machine agricole (1) qui vient d'être décrite, est expliqué en se référant aux schémas de principe représentés sur les figures 8, 9 et 10.

La figure 8 montre le dispositif de freinage tel qu'il se présente durant le transport normal : le levier à cliquet (55) est en position d'ouverture des freins (35), le frein de service (66) du véhicule moteur (2) n'est pas actionné. Dans ce cas, la tige (47) du premier vérin (42) est complètement rentrée dans le corps (46) de celui-ci sous l'action du ressort mécanique de compression (53). Les deux deuxièmes vérins (43) sont allongés. Chaque biellette de commande (38) est en position pivotée vers le bas. Les freins (35) des deux roues de transport (7) ne sont pas actionnés.

La figure 9 montre le dispositif de freinage tel qu'il se présente durant le transport lorsque l'utilisateur actionne le frein de service (66) du véhicule moteur (2). Du fluide sous pression, en provenance du circuit du frein de service (66) du véhicule moteur (2), est injecté dans la deuxième chambre (57) du premier vérin (42). Le piston (58) est repoussé et fait sortir la tige (47) du corps (46). La sortie de la tige (47) aspire du fluide contenu dans les deux deuxièmes vérins (43). Chaque ressort de manoeuvre mécanique (45) fait pivoter la biellette de commande (38) correspondante vers le haut. Les freins (35) des deux roues de transport (7) sont actionnés.

Dès que l'utilisateur relâche son action sur le frein de service (66) du véhicule moteur (2), le ressort mécanique de compression (53) replace le dispositif de freinage dans la configuration représentée sur la figure 8.

La figure 10 montre le dispositif de freinage tel qu'il se présente durant le parcage de la machine agricole (1) lorsqu'elle est dételée du véhicule moteur (2) (figure 3). Le levier à cliquet (55) est en position de fermeture du frein (35), la conduite (65) n'est plus raccordée au circuit du frein de service (66) du véhicule moteur (2). La sortie de la tige (47) du premier vérin (42) a provoqué le transvasement de fluide des deux deuxièmes vérins (43) vers le premier vérin (42). Chaque ressort de manoeuvre mécanique (45) maintient la biellette de commande (38) correspondante en position pivotée vers le haut. Les freins (35) des deux roues de transport (7) sur lesquelles repose la machine agricole (1) durant le parcage, sont actionnés.

On comprendra que les freins (35) restent bloqués, même si, durant le parcage de la machine agricole (1), une conduite (44) liant le premier vérin (42) au deuxième vérin (43) correspondant devenait défectueuse.

Lorsque la machine agricole (1) est à nouveau attelée à un véhicule moteur (2), l'utilisateur replace le levier à cliquet (55) en position d'ouverture des freins (35). Le ressort mécanique de compression (53) replace le dispositif de freinage dans la configuration représentée sur la figure 8.

Diverses modifications peuvent être apportées à l'exemple de réalisation qui vient d'être décrit sans qu'on sorte pour autant du cadre général de la présente invention tel que défini dans les revendications suivantes.

C'est ainsi par exemple que le ressort de manoeuvre mécanique (45) pourrait très bien être logé à l'intérieur du deuxième vérin (43) correspondant et être réalisé sous forme de ressort de compression ou de traction selon le cas.

## Revendications

1. Machine agricole comportant d'une part un corps (3) s'appuyant sur le sol (8) à l'aide d'au moins une roue (7) liée à un support de roue (14) et à laquelle est associé un frein (35), et d'autre part un moyen d'attelage (4) destiné à lier la machine agricole (1) à un véhicule moteur (2), ledit support de roue (14) étant articulé à un châssis (9) que comporte le corps (3) ou au moyen d'attelage (4), ledit frein (35) comprenant notamment un organe de commande (40) constitué d'une biellette de commande (38) montée sur un axe de commande de came (36) et sur laquelle agit un organe de manoeuvre (41) actionné par un organe d'actionnement (54, 55) en vue du blocage du frein (35) lors du parcage de la machine agricole (1), ledit organe de manoeuvre (41) comprenant :
- un premier vérin (42) actionné par l'organe d'actionnement (54, 55),
- un deuxième vérin (43) implanté entre le support de roue (14) et la biellette de commande (38), et branché en série avec le premier vérin (42), et
- un ressort de manoeuvre mécanique (45) implanté directement ou indirectement entre le support de roue (14) et la biellette de commande (38),
ce ressort de manoeuvre mécanique (45) rendant le frein (35) actif lorsque l'organe d'actionnement (54, 55) est actionné à la fermeture, tandis que le deuxième vérin (43) neutralise le frein (35) lorsque l'organe d'actionnement (54, 55) est actionné à l'ouverture.

2. Machine agricole selon la revendication 1, ***caractérisée en ce que*** le premier vérin (42) comporte un corps (46) et une tige (47) qui est déplacée dans un sens par l'organe d'actionnement (54, 55) lorsque celui-ci est actionné à la fermeture, et qu'il est prévu un organe accumulateur d'énergie (53) pour déplacer ladite tige (47) dans l'autre sens lorsque l'organe d'actionnement (54, 55) est actionné à l'ouverture.

3. Machine agricole selon la revendication 2, ***caractérisée en ce que*** l'organe d'actionnement (54, 55) tire la tige (47) en dehors du corps (46) du premier vérin (42) lorsque ledit organe d'actionnement (54, 55) est actionné à la fermeture, tandis que l'organe accumulateur d'énergie (53) fait rentrer la tige (47) dans le corps (46) du premier vérin (42) lorsque l'organe d'actionnement (54, 55) est actionné à l'ouverture.

4. Machine agricole selon la revendication 2 ou 3, ***caractérisée en ce que*** ledit organe accumulateur d'énergie (53) s'étend à l'intérieur du corps (46) du premier vérin (42).

5. Machine agricole selon l'une quelconque des revendications 2 à 4, ***caractérisée*** ***en ce que*** ledit organe accumulateur d'énergie (53) est un ressort mécanique.

6. Machine agricole selon la revendication 5 prise en combinaison avec la revendication 3 ou 4, ***caractérisée en ce que*** ledit ressort mécanique (53) est un ressort de compression entourant la partie de la tige (47) s'étendant à l'intérieur du corps (46) du premier vérin (42).

7. Machine agricole selon l'une quelconque des revendications 1 à 6, ***caractérisée en ce que*** le ressort de manoeuvre mécanique (45) est monté en parallèle avec le deuxième vérin (43).

8. Machine agricole selon la revendication 7, ***caractérisée en ce que*** le ressort de manoeuvre mécanique (45) entoure le deuxième vérin (43).

9. Machine agricole selon la revendication 8, ***caractérisée en ce que*** le ressort de manoeuvre mécanique (45) est fixé, à l'une de ses extrémités, sur le corps (70) du deuxième vérin (43) et, à l'autre de ses extrémités, sur la tige (68) dudit deuxième vérin (43).

10. Machine agricole selon l'une quelconque des revendications 1 à 9, ***caractérisée en ce qu'***il est prévu un dispositif de réglage (80) pour compenser l'usure du frein (35).

11. Machine agricole selon la revendication 10, ***caractérisée en ce que*** ledit dispositif de réglage (80) permet une compensation continue de l'usure du frein (35).

12. Machine agricole selon la revendication 10 ou 11, ***caractérisée en ce que*** le dispositif de réglage (80) est prévu au niveau de la liaison du deuxième vérin (43) et, le cas échéant, de la liaison du ressort de manoeuvre mécanique (45) au support de roue (14).

13. Machine agricole selon l'une quelconque des revendications 1 à 12, ***caractérisée en ce que*** l'organe d'actionnement (54, 55) est monté sur le moyen d'attelage (4) dans le voisinage où celui-ci est destiné à être attelé au véhicule moteur (2).

14. Machine agricole selon l'une quelconque des revendications 1 à 13, ***caractérisée en ce qu'***il est prévu un élément de commande à distance (56) permettant d'actionner l'organe d'actionnement (54, 55) à partir du véhicule moteur (2) auquel est destinée à être attelée la machine agricole (1).

15. Machine agricole selon l'une quelconque des revendications 1 à 14, ***caractérisée en ce que*** l'organe d'actionnement (54, 55) est constitué d'un levier à cliquet (55).

16. Machine agricole selon l'une quelconque des revendications 2 à 6, ***caractérisée en ce que*** ladite roue (7) est une roue de transport et que le premier vérin (42) comporte une autre chambre (57) entièrement traversée par la tige (47) dudit premier vérin (42) et contenant un piston (58) susceptible de coulisser sur ladite tige (47) jusqu'à une butée (59) prévue sur celle-ci, ledit piston (58) pouvant être appliqué contre ladite butée (59) au moyen d'un fluide sous pression délivré par l'utilisateur, à partir d'une source d'alimentation, pour déplacer ladite tige (47) en vue de rendre le frein (35) actif.

17. Machine agricole selon la revendication 16, ***caractérisée en ce que*** le fluide sous pression est délivré par la source d'alimentation lorsque l'utilisateur actionne le frein de service (66) du véhicule moteur (2) auquel est destinée à être attelée la machine agricole (1).

18. Machine agricole selon l'une quelconque des revendications 1 à 17, ***caractérisée en ce qu'***elle comporte plusieurs roues (7) à chacune desquelles sont associés un deuxième vérin (43) et un ressort de manoeuvre mécanique (45).

19. Machine agricole selon la revendication 18, ***caractérisée en ce que*** le premier vérin (42) est commun à toutes les roues (7).

## Claims

1. Agricultural machine comprising, on the one hand, a body (3) resting on the ground (8) via at least one wheel (7) connected to a wheel support (14) and with which a brake (35) is associated and, on the other hand, a hitching means (4) intended to connect the agricultural machine (1) to a motor vehicle (2), the said wheel support (14) being articulated to a chassis (9) that the body (3) has or to the hitching means (4), the said brake (35) particularly comprising an operating member (40) consisting of an operating rod (38) mounted on a cam operating shaft (36) and on which a manoeuvring member (41), actuated by an actuating member (54, 55) acts with a view to putting the brake (35) on when parking the agricultural machine (1), the said manoeuvring member (41) comprising:
- a first ram (42) actuated by the actuating member (54, 55),
- a second ram (43) fitted between the wheel support (14) and the operating rod (38) and connected in series with the first ram (42), and
- a mechanical manoeuvring spring (45) fitted directly or indirectly between the wheel support (14) and the operating rod (38),
this mechanical manoeuvring spring (45) rendering the brake (35) active when the actuating member (54, 55) is actuated to put the brake on, while the second ram (43) cancels the effect of the brake (35) when the actuating member (54, 55) is actuated to release the brake.

2. Agricultural machine according to Claim 1, ***characterized in*** that the first ram (42) comprises a body (46) and a rod (47) which is moved in one direction by the actuating member (54, 55) when the latter is actuated to put the brake on, and in that there is an energy accumulator member (53) for moving the said rod (47) in the other direction when the actuating member (54, 55) is actuated to release the brake.

3. Agricultural machine according to Claim 2, ***characterized in*** that the actuating member (54, 55) pulls the rod (47) out of the body (46) of the first ram (42) when the said actuating member (54, 55) is actuated to put the brake on, whereas the energy accumulator member (53) causes the rod (47) to retract into the body (46) of the first ram (42) when the actuating member (54, 55) is actuated to release the brake.

4. Agricultural machine according to Claim 2 or 3, ***characterized in*** that the said energy accumulator member (53) extends inside the body (46) of the first ram (42).

5. Agricultural machine according to any one of Claims 2 to 4, ***characterized*** ***in*** that the said energy accumulator member (53) is a mechanical spring.

6. Agricultural machine according to Claim 5 taken in combination with Claim 3 or 4, ***characterized in*** that the said mechanical spring (53) is a compression spring surrounding that part of the rod (47) that extends inside the body (46) of the first ram (42).

7. Agricultural machine according to any one of Claims 1 to 6, ***characterized in*** that the mechanical manoeuvring spring (45) is mounted in parallel with the second ram (43).

8. Agricultural machine according to Claim 7, ***characterized in*** that the mechanical manoeuvring spring (45) surrounds the second ram (43).

9. Agricultural machine according to Claim 8, ***characterized in*** that the mechanical manoeuvring spring (45) is fixed, at one of its ends, to the body (70) of the second ram (43) and, at the other of its ends, to the rod (68) of the said second ram (43).

10. Agricultural machine according to any one of Claims 1 to 9, ***characterized in*** that there is an adjusting device (80) for compensating for wear of the brake (35).

11. Agricultural machine according to Claim 10, ***characterized in*** that the said adjusting device (80) allows continuous compensation for the wear of the brake (35).

12. Agricultural machine according to Claim 10 or 11, ***characterized in*** that the adjusting device (80) is in the region of the connection of the second ram (43) and, as appropriate, the connection of the mechanical manoeuvring spring (45), with the wheel support (14).

13. Agricultural machine according to any one of Claims 1 to 12, ***characterized*** ***in*** that the actuating member (54, 55) is mounted on the hitching means (4) in the region where the latter is intended to be hitched to the motor vehicle (2).

14. Agricultural machine according to any one of Claims 1 to 13, ***characterized*** ***in*** that a remote-control element (56) is provided to allow the actuating member (54, 55) to be actuated from the motor vehicle (2) to which the agricultural machine (1) is intended to be hitched.

15. Agricultural machine according to any one of claims 1 to 14, ***characterized*** ***in*** that the actuating member (54, 55) consists of a ratchet lever (55).

16. Agricultural machine according to any one of Claims 2 to 6, ***characterized in*** that the said wheel (7) is a transport wheel and in that the first ram (42) comprises another chamber (57) through which the rod (47) of the said first ram (42) fully passes and containing a piston (58) capable of sliding along the said rod (47) as far as a stop (59) provided thereon, it being possible for the said piston (58) to be pressed against the said stop (59) by means of a pressurized fluid delivered by the user, from a supply source, so as to move the said rod (47) with a view to putting the brake (35) on.

17. Agricultural machine according to Claim 16, ***characterized in*** that the pressurized fluid is delivered by the supply source when the user actuates the service brake (66) of the motor vehicle (2) to which the agricultural machine (1) is intended to be hitched.

18. Agricultural machine according to any one of Claims 1 to 17, ***characterized*** ***in*** that it comprises several wheels (7), with each of which a second ram (43) and a mechanical manoeuvring spring (45) are associated.

19. Agricultural machine according to Claim 18, ***characterized in*** that the first ram (42) is common to all the wheels (7).

## Patentansprüche

1. Landmaschine, die einerseits einen Körper (3) umfaßt, der sich mit Hilfe mindestens eines Rads (7), das mit einer Radstütze (14) verbunden und dem eine Bremse (35) zugeordnet ist, auf den Boden (8) stützt, und andererseits ein Kupplungsmittel (4), das die Landmaschine (1) mit einem Motorfahrzeug (2) verbinden soll, wobei die Radstütze (14) gelenkig an einem Rahmen (9), den der Körper (3) umfaßt, oder am Kupplungsmittel (4) angebracht ist, wobei die Bremse (35) insbesondere ein Steuerorgan (40) umfaßt, das aus einem Steuerschwingarm (38) besteht, der auf einer Nockensteuerwelle (36) montiert ist und auf den ein Bedienungsorgan (41) wirkt, das durch ein Betätigungsorgan (54, 55) zum Anziehen der Bremse (35) beim Parken der Landmaschine (1) betätigt wird, wobei das Bedienungsorgan (41)
- einen ersten durch das Betätigungsorgan (54, 55) betätigten Zylinder (42),
- einen zweiten Zylinder (43), der zwischen der Radstütze (14) und dem Steuerschwingarm (38) angeordnet und mit dem ersten Zylinder (42) in Reihe geschaltet ist,
und
- eine mechanische Bedienungsfeder (45), die direkt oder indirekt zwischen der Radstütze (14) und dem Steuerschwingarm (38) angeordnet ist,
umfaßt, wobei diese mechanische Bedienungsfeder (45) die Bremse (35) wirksam macht, wenn das Betätigungsorgan (54, 55) zum Schließen betätigt wird, wohingegen der zweite Zylinder (43) die Bremse (35) unwirksam macht, wenn das Betätigungsorgan (54, 55) zum Öffnen betätigt wird.

2. Landmaschine nach Anspruch 1, ***dadurch gekennzeichnet,*** daß der erste Zylinder (42) ein Gehäuse (46) und eine Stange (47) umfaßt, die durch das Betätigungsorgan (54, 55) in einer Richtung verschoben wird, wenn dieses zum Schließen betätigt wird, und daß ein Energiespeicherorgan (53) zum Verschieben der Stange (47) in die andere Richtung, wenn das Betätigungsorgan (54, 55) zum Öffnen betätigt wird, vorgesehen ist.

3. Landmaschine nach Anspruch 2, ***dadurch gekennzeichnet,*** daß das Betätigungsorgan (54, 55) die Stange (47) aus dem Gehäuse (46) des ersten Zylinders (42) zieht, wenn das Betätigungsorgan (54, 55) zum Schließen betätigt wird, wohingegen das Energiespeicherorgan (53) die Stange (47) wieder in das Gehäuse (46) des ersten Zylinders (42) zurückgleiten läßt, wenn das Betätigungsorgan (54, 55) zum Öffnen betätigt wird.

4. Landmaschine nach Anspruch 2 oder 3, ***dadurch gekennzeichnet,*** daß sich das Energiespeicherorgan (53) in das Innere des Gehäuses (46) des ersten Zylinders (42) erstreckt.

5. Landmaschine nach irgend einem der Ansprüche 2 bis 4, ***dadurch*** ***gekennzeichnet,*** daß das Energiespeicherorgan (53) eine mechanische Feder ist.

6. Landmaschine nach Anspruch 5 in Kombination mit dem Anspruch 3 oder 4, ***dadurch gekennzeichnet****,* daß die mechanische Feder (53) eine Druckfeder ist, die den Teil der Stange (47) umgibt, der sich in das Innere des Gehäuses (46) des ersten Zylinders (42) erstreckt.

7. Landmaschine nach irgend einem der Ansprüche 1 bis 6, ***dadurch*** ***gekennzeichnet****,* daß die mechanische Bedienungsfeder (45) parallel zum zweiten Zylinder (43) montiert ist.

8. Landmaschine nach Anspruch 7, ***dadurch gekennzeichnet,*** daß die mechanische Bedienungsfeder (45) den zweiten Zylinder (43) umgibt.

9. Landmaschine nach Anspruch 8, ***dadurch gekennzeichnet****,* daß die mechanische Bedienungsfeder (45) an einem ihrer Enden am Gehäuse (70) des zweiten Zylinders (43) und an ihrem anderen Ende an der Stange (68) des zweiten Zylinders (43) befestigt ist.

10. Landmaschine nach irgend einem der Ansprüche 1 bis 9, ***dadurch*** ***gekennzeichnet****,* daß eine Einstellungsvorrichtung (80) zum Ausgleich des Verschleißes der Bremse (35) vorgesehen ist.

11. Landmaschine nach Anspruch 10, ***dadurch gekennzeichnet,*** daß die Einstellungsvorrichtung (80) einen kontinuierlichen Ausgleich des Verschleißes der Bremse (35) ermöglicht.

12. Landmaschine nach Anspruch 10 oder 11 ***dadurch gekennzeichnet,*** daß die Einstellungsvorrichtung (80) an der Verbindung des zweiten Zylinders (43) und gegebenenfalls an der Verbindung der mechanischen Bedienungsfeder (45) mit der Radstütze (14) vorgesehen ist.

13. Landmaschine nach irgend einem der Ansprüche 1 bis 12, ***dadurch*** ***gekennzeichnet****,* daß das Betätigungsorgan (54, 55) an der Kupplungsvorrichtung (4) in Nähe der Stelle montiert, an der sie an das Motorfahrzeug (2) angekuppelt werden soll.

14. Landmaschine nach irgend einem der Ansprüche 1 bis 13, ***dadurch*** ***gekennzeichnet****,* daß ein Fernsteuerungselement (56) vorgesehen ist, das es ermöglicht, das Betätigungsorgan (54, 55) vom Motorfahrzeug (2) aus, an das die Landmaschine (1) angekuppelt werden soll, zu betätigen.

15. Landmaschine nach irgend einem der Ansprüche 1 bis 14, ***dadurch*** ***gekennzeichnet,*** da**ß** das Betätigungsorgan (54, 55) aus einem Hebel mit Sperrklinke (55) besteht.

16. Landmaschine nach irgend einem der Ansprüche 2 bis 6, ***dadurch*** ***gekennzeichnet****,* daß das Rad (7) ein Transportrad ist und daß der erste Zylinder (42) eine weitere Kammer (57) umfaßt, die vollständig von der Stange (47) des ersten Zylinders (42) durchquert wird und die einen Kolben (58) enthält, der auf der Stange (47) bis zu einem auf dieser vorgesehenen Anschlag (59) gleiten kann, wobei dieser Kolben (58) mittels einer vom Nutzer von einer Versorgungsquelle versorgten Druckflüssigkeit gegen den Anschlag (59) gedrückt werden kann, um die Stange (47) zu verschieben, damit die Bremse (35) in Funktion versetzt wird.

17. Landmaschine nach Anspruch 16, ***dadurch gekennzeichnet,*** daß die Druckflüssigkeit von der Versorgungsquelle versorgt wird, wenn der Nutzer die Betriebsbremse (66) des Motorfahrzeugs (2), an das die Landmaschine (1) angekuppelt werden soll, betätigt.

18. Landmaschine nach irgend einem der Ansprüche 1 bis 17, ***dadurch*** ***gekennzeichnet****,* daß sie mehrere Räder (7) umfaßt, wobei jedem von diesen ein zweiter Zylinder (43) und eine mechanische Bedienungsfeder (45) zugeordnet sind.

19. Landmaschine nach Anspruch 18, ***dadurch gekennzeichnet,*** daß der erste Zylinder (42) für alle Räder (7) gemeinsam vorgesehen ist.
